# EUROPÄISCHE PATENTANMELDUNG

(11) **EP 3 168 124 A1**
(43) Veröffentlichungstag der Anmeldung: **17.05.2017**
(21) Anmeldenummer: 16191301.7
(22) Anmeldetag: 29.09.2016
(51) Int. Cl.: B62M 6/45, B62M 6/50

(54) **NOTABSCHALTANORDNUNG UND FAHRZEUG**

(30) Priorität: 10.11.2015 DE 102015222056
(71) Anmelder: ROBERT BOSCH GMBH, 70442 Stuttgart (DE)
(72) Erfinder: Stracke, Rolf, 75305 Neuenbuerg (DE); Mueller, Juergen, 71726 Benningen (DE)

(57) **Zusammenfassung**

Die vorliegende Erfindung betrifft ein Notabschaltanordnung (20) Notabschaltanordnung (20) für einen Antrieb (80) eines mit Motorkraft und insbesondere zusätzlich mit Muskelkraft antreibbaren Fahrzeuges (1), Elektrofahrrades, E-Bikes, Pedelecs oder dergleichen, welche eine Sensoreinheit (30) und eine Auswerteeinheit (40) aufweist, wobei die Sensoreinheit (30) ausgebildet ist, (i) mindestens eine Größe zu überwachen, die für einen Zustand des Fahrzeuges (1) und/oder eines Fahrers des Fahrzeuges (1) charakteristisch ist, und (ii) mindestens einen Wert der mindestens einen Größe bereitzustellen, und wobei die Auswerteeinheit (40) ausgebildet ist, (iii) aus dem mindestens einen Wert der mindestens einen Größe zu bestimmen, ob ein Abschaltzustand vorliegt, und (iv) beim Vorliegen eines Abschaltzustandes zu bewirken oder zu veranlassen, dass der Antrieb (80) des Fahrzeuges (1) einen inaktiven Zustand einnimmt oder beibehält.

## Beschreibung

### Stand der Technik

Die vorliegende Erfindung betrifft eine Notabschaltanordnung und ein Fahrzeug. Die vorliegende Erfindung betrifft insbesondere eine Notabschaltanordnung für einen Antrieb eines mit Motorkraft und insbesondere zusätzlich mit Muskelkraft antreibbaren Fahrzeuges, eines Elektrofahrrades, eines E-Bikes, Pedelecs oder dergleichen. Ferner betrifft die vorliegende Erfindung insbesondere ein Fahrzeug, welches mit Motorkraft und insbesondere zusätzlich mit Muskelkraft antreibbar ist, ein Elektrofahrrad, ein E-Bike, ein Pedelec oder dergleichen.

Bei mit Motorkraft und insbesondere bei zusätzlich mit Muskelkraft antreibbaren Fahrzeugen, z. B. bei Elektrofahrrädern oder dergleichen, kann es auf Grund des drehmomentenstarken Antriebes in bestimmten Benutzungsfällen zu kritischen Situationen kommen. Dies ist insbesondere dann der Fall, wenn der Fahrer das Fahrzeug nicht mehr beherrscht und der Antrieb dennoch für einen Vortrieb sorgt. Zusätzliche kritische Situationen können durch Fehlfunktion des Antriebes oder anderer Komponenten des Fahrzeuges zu einem Unfall führen. Zwar sind die meisten Antriebe mit einem Betätigungsmechanismus versehen, so dass beim Loslassen des Mechanismus die Drehmomenterzeugung oder die Drehmomentübertragung und somit der Vortrieb des Antriebes erlischt. Dies ist jedoch nicht ausreichend, da gerade bei ungeübten Fahrern das Erlöschen des Vortriebes unter Umständen zu spät erfolgt und damit das Fahrzeug erst in eine kritische Situation gerät, in der der Fahrer das Fahrzeug nicht mehr beherrscht.

### Offenbarung der Erfindung

Die erfindungsgemäße Notabschaltanordnung mit den Merkmalen des Anspruchs 1 weist demgegenüber den Vorteil auf, dass der Zustand des Fahrzeuges und/oder des Fahrers des Fahrzeuges automatisch überwacht wird, um ggf. und ohne zutun des Fahrers bereits im Entstehen einer Gefahrensituation einen Abschaltzustand zu detektieren und den Antrieb in einen inaktiven Zustand zu überführen. Dies wird erfindungsgemäß mit den Merkmalen des unabhängigen Anspruches 1 dadurch erreicht, dass eine Notabschaltanordnung für einen Antrieb eines mit Motorkraft und insbesondere zusätzlich mit Muskelkraft antreibbaren Fahrzeuges, Elektrofahrrades, E-Bikes, Pedelecs oder dergleichen, geschaffen wird, welche eine Sensoreinheit und eine Auswerteeinheit aufweist. Die Sensoreinheit ist ausgebildet, (i) mindestens eine Größe zu überwachen, die für einen Zustand des Fahrzeuges und/oder eines Fahrers des Fahrzeuges charakteristisch ist, und (ii) mindestens einen Wert der mindestens einen Größe bereitzustellen. Die Auswerteeinheit ist ausgebildet, (iii) aus dem mindestens einen Wert der mindestens einen Größe zu bestimmen, ob ein Abschaltzustand vorliegt, und (iv) beim Vorliegen eines Abschaltzustandes zu bewirken oder zu veranlassen, dass der Antrieb des Fahrzeuges einen inaktiven Zustand einnimmt oder beibehält. Erfindungsgemäß wird also zusätzlich zur subjektiven Wahrnehmung der Fahrsituation durch den Fahrer über die Sensoreinheit der Zustand des Fahrzeuges und/oder des Fahrers des Fahrzeuges überwacht und eine für den Zustand charakteristische Größe bestimmt. Aus dem Wert der Größe direkt oder alternativ oder zusätzlich über ein entsprechendes für den Wert der Größe repräsentatives Signal durch die Auswerteeinheit eine Bewertung erfolgen, ob ein so genannter Abschaltzustand vorliegt. Ein Abschaltzustand ist dabei ein Zustand, bei welchem der Antrieb des Fahrzeuges in einen inaktiven Zustand versetzt wird oder, sofern er bereits in einem inaktiven Zustand ist, in diesem gehalten wird. Auf diese Art und Weise kann bereits frühzeitig eine Gefahrensituation entschärft werden, weil über die Sensoreinheit auch Zustände des Fahrzeuges und/oder des Fahrers des Fahrzeuges detektierbar sind, die der Fahrer selbst nicht oder erst zu spät wahrnimmt.

Das Bereitstellen eines Wertes einer Größe kann direkt erfolgen z.B. durch einen Messprozess oder durch Erzeugen und Abgabe eines für den oder die Werte repräsentativen Signales.

Es können eine oder mehrere Größen überwacht werden, z.B. durch ein oder mehrmaliges Erfassen von Werten der Größen durch einen Messprozess.

Unter einer für einen Zustand charakteristischen Größe wird eine Größe verstanden, deren Werte geeignet sind den in Rede stehenden Zustand teilweise oder vollständig zu beschreiben.

Unter einem Bewirken einer Inaktivierung und dergleichen soll auch die Möglichkeit umfasst sein, entsprechende technische Mittel zu veranlassen.

Die Unteransprüche zeigen bevorzugte Weiterbildungen der Erfindung.

Bei einer vorteilhaften Weiterbildung der erfindungsgemäßen Notabschaltanordnung ist der inaktive Zustand des Antriebes des Fahrzeuges ein Zustand, bei welchem eine Kopplung des Antriebes mit Drehmomentübertragung an ein Antriebsrad des Fahrzeuges unterbrochen, unterdrückt oder vermindert ist. Die Drehmomenterzeugung oder die Drehmomentübertragung kann am einfachsten durch Abschalten eines dem Antrieb des Fahrzeuges zu Grunde liegenden Motors erfolgen, z.B. durch ein Unterbrechen der Energieversorgung. Alternativ dazu kann jedoch ausschließlich eine Momententkopplung des Motors des Antriebes vom Abtriebsstrang erfolgen, so dass der Motor als solcher in Betrieb gehalten wird, die Drehmomentübertragung an das Antriebsrad als Abtriebselement jedoch unterbrochen ist.

Zum Erfassen der Situation und insbesondere des Zustandes des Fahrzeuges und/oder des Fahrers des Fahrzeuges weist die Sensoreinheit in vorteilhafter Weise einen oder mehrere Sensoren auf.

Diese Sensoren können einzeln eine oder mehrere den Zustand des Fahrzeuges und/oder des Fahrers des Fahrzeuges beschreibende Größen messen oder überwachen.

Alternativ oder zusätzlich können auch mehrere Sensoren zusammenwirkend verwendet werden, um ein oder mehrere Werte einer oder mehrerer für den Zustand des Fahrzeuges und/oder des Fahrers des Fahrzeuges charakteristischer Größen zu bestimmen.

Es bieten sich vielfältige Möglichkeiten des Sensoreinsatzes an, um den Zustand des Fahrzeuges und/oder des Fahrers des Fahrzeuges zu charakterisieren. So kann es einzeln oder in Kombination vorgesehen sein, dass der eine oder die mehreren Sensoren ausgebildet sind, einen oder mehrere Werte einer oder mehrerer Größen, aus der Gruppe zu bestimmen, die aufweist:
- eine Position, Lage und/oder Orientierung des Fahrzeuges und/oder deren zeitliche Änderung, insbesondere ein Gieren, Nicken und/oder Wanken,
- eine Fahrgeschwindigkeit des Fahrzeuges,
- eine Fahrbeschleunigung des Fahrzeuges, insbesondere einen Stoß und/oder Aufprall,
- ein Drehmoment des Antriebes,
- eine Drehzahl des Antriebes,
- eine Drehzahl eines oder mehrerer Räder, insbesondere eine Drehzahldifferenz zwischen verschiedenen Rädern und/oder einen Schlupf eines oder mehrerer Räder,
- einen Lenkwinkel des Fahrzeuges,
- einen Einschlagwinkel eines Lenkers des Fahrzeuges,
- einen Kontakt des Fahrers des Fahrzeuges zu einem oder beiden von zwei Lenkergriffen des Fahrzeuges,
- einen Kontakt des Fahrers des Fahrzeuges zu einer oder beiden von zwei Pedalen des Fahrzeuges,
- einen Kontakt des Fahrers des Fahrzeuges zu einem Sitz des Fahrzeuges,
- einen Abstand des Fahrers des Fahrzeuges zu einer oder zu mehreren Komponenten und insbesondere zum Lenker des Fahrzeuges und
- eine zeitweise oder andauernde teilweise oder vollständige Abwesenheit oder Trennung des Fahrers vom Fahrzeug.

Dies kann in einer beliebigen Kombination erfolgen. Es können auch zeitliche Änderungen der Größen und ihrer Werte bei der Analyse berücksichtigt werden.

Auch im Hinblick auf das dem jeweiligen Sensor zu Grunde liegende Messprinzip bieten sich verschiedene Möglichkeiten an. So kann ein jeweiliger Sensor ausgewählt sein aus der Gruppe, die aufweist elektrische Sensoren, magnetische Sensoren, Drucksensoren, optische Sensoren, Infrarotsensoren, Funksensoren und dergleichen.

Um den Zustand des Fahrzeuges und/oder des Fahrers des Fahrzeuges bewerten zu können, bieten sich unterschiedliche Auswerteschemata in Bezug auf die von der Sensoreinheit erfassten Werte übenivachter Größen an. Besonders vorteilhaft ist der Vergleich mit Schwellwerten, Grenzwerten oder Wertebereichen.

So ist es bei einer besonders bevorzugten erfindungsgemäßen Notabschaltanordnung vorgesehen, dass die Auswerteeinheit ausgebildet ist, das Vorliegen eines Abschaltzustandes festzustellen, wenn ein Wert oder Werte einer oder mehrerer charakteristischer Größen in einem vorgegebenen Abschaltbereich liegen und insbesondere einen vorgegebenen Grenzwert überoder unterschreiten.

Im Betrieb eines Fahrzeuges kann eine Situation nicht ausgeschlossen werden, bei welcher eine Gefahrensituation nur temporär, also für eine vergleichsweise kurze Zeitspanne, vorliegt, und sich die Situation entschärft und/oder der Fahrer des Fahrzeuges die Kontrolle über das Fahrzeug zurückgewinnt. In einer solchen Situation ist es nicht unbedingt notwendig, den Fahrbetrieb durch Inaktivieren des Antriebes des Fahrzeuges doch noch zu beeinflussen.

Um derartige Situationen einer Überkompensation zu vermeiden, ist es bei einer bevorzugten Ausgestaltungsform der erfindungsgemäßen Notabschaltanordnung vorgesehen, dass die Auswerteeinheit ausgebildet ist, das Vorliegen eines Abschaltzustandes erst dann festzustellen, wenn zu mehreren aufeinanderfolgenden Zeitpunkten ein Wert oder Werte einer oder mehrerer charakteristischer Größen in einem vorgegebenen Abschaltbereich liegen und insbesondere einen vorgegebenen Grenzwert über- oder unterschreiten.

Es ist z. B. denkbar, kurzmaschig Werte einer Messgröße zu erfassen und erst dann einen Abschaltzustand zu detektieren, wenn mehrmals hintereinander ein bestimmtes Abschaltkriterium erfüllt ist, z. B. ein Schwellwert überschritten oder unterschritten wird oder der Wert einer Größe in einem bestimmten Werteintervall liegt.

Denkbar ist auch eine Auswertung, bei welcher ein Abschaltzustand auch dann nicht bestimmt wird, wenn der Wert einer Größe zwar in einem vorgegebenen Abschaltbereich für die Werte der Größe liegt, aus dem zeitlichen Verlauf aufeinanderfolgender Werte der Größe jedoch zu erkennen ist, dass der Wert der Größe den Abschaltbereich demnächst verlassen wird.

Um ein besonders energieeffizientes Vorgehen zu ermöglichen, ist es bei einer anderen Ausgestaltungsform der erfindungsgemäßen Notabschaltanordnung vorgesehen, dass die Notabschaltanordnung nur dann aktiv ist, wenn sich der Antrieb und insbesondere der dem Antrieb zu Grunde liegende Motor in einem aktiven Zustand befindet. Dabei kann die Aktivierung der Notabschaltanordnung auch von einer Drehzahl und/oder einem Drehmoment des Antriebes abhängig gemacht werden.

Um bestimmte Fahrmanöver des Fahrzeuges zuzulassen, die den Zustand des Fahrzeuges in einen Grenzbereich führen können, bei dem die Notabschaltanordnung greifen würde, ist es bei einer anderen bevorzugten Ausgestaltungsform der vorliegenden Erfindung vorgesehen, dass eine Umgehungseinheit ausgebildet ist, durch deren Betätigung die Notabschaltanordnung in einen inaktiven Zustand schaltbar ist, in welchem die Notabschaltanordnung nicht bewirkt, dass der Antrieb des Fahrzeuges einen inaktiven Zustand einnimmt oder beibehält.

Die Umgehungseinheit kann sich auch auf Teile des Aktivitätsspektrums der Notabschaltanordnung erstrecken. So können bestimmte Sensorkomponenten von der Bewertung, ob ein Abschaltzustand vorliegt oder nicht, selektiv einbezogen oder ausgeschlossen werden. Auf diese Art und Weise kann unterschiedlichen Fertigkeiten des Fahrers Rechnung getragen werden.

Grundsätzlich ist auch denkbar, die der Bewertung durch die Notabschaltanordnung zu Grunde liegenden Parameter, z. B. die jeweiligen Schwellwerte oder Abschaltbereiche der Werte der zu überwachenden Größen, individuell oder auch situativ festzulegen. Es ist z. B. denkbar, dass eine dynamische Anpassung erfolgt, um die wachsende Vertrautheit des Fahrers des Fahrzeuges zu berücksichtigen.

Andererseits ist es von Vorteil, wenn dem Fahrer des Fahrzeuges ständig die Möglichkeit gegeben wird, in den Fahrbetrieb des Fahrzeuges einzugreifen, um eine aus seiner subjektiven Sicht riskante Situation zu entschärfen.

Daher ist bei einer vorteilhaften Weiterbildung der erfindungsgemäßen Notabschaltanordnung eine Not-Aus-Einheit ausgebildet ist, welche bei-insbesondere manueller-Betätigung bewirkt, dass der Antrieb des Fahrzeuges einen inaktiven Zustand einnimmt oder beibehält.

Um die Verwendung eines Fahrzeuges noch sicherer zu gestalten, kann es bei einer anderen vorteilhaften Weiterbildung der erfindungsgemäßen Notabschaltanordnung vorgesehen sein, dass nach dem Eintreten eines Abschaltzustandes und dem Beenden oder Auslaufen einer kritischen Situation der Normalbetrieb des Fahrzeuges und also insbesondere des Antriebes des Fahrzeuges nicht ohne Weiteres wieder aufgenommen wird. Es kann ferner ein bewusstes Eingreifens durch den Fahrzeugführer notwendig gemacht werden.

So ist es von besonderem Vorteil, wenn eine Reaktivierungseinheit ausgebildet ist zu bewirken, dass in oder nach einem Abschaltzustand und/oder im inaktiven Zustand des Antriebes der Antrieb des Fahrzeuges den inaktiven Zustand bis zur Betätigung der Reaktivierungseinheit beibehält.

Ferner betrifft die vorliegende Erfindung ein Fahrzeug, welches mit Motorkraft und insbesondere zusätzlich mit Muskelkraft antreibbar ist, insbesondere ein Elektrofahrrad, ein E-Bike, ein Pedelec oder dergleichen. Das erfindungsgemäße Fahrzeug ist mit einem Antrieb, mindestens einem Rad, welches mit dem Antrieb antreibbar ist und einer erfindungsgemäßen Notabschaltanordnung ausgebildet. Die Notabschaltanordnung ist vorgesehen, um den Antrieb des Fahrzeuges zu steuern.

### Kurzbeschreibung der Figuren

Unter Bezugnahme auf die beigefügten Figuren werden Ausführungsformen der Erfindung im Detail beschrieben.
- Figur 1: ist eine schematische Darstellung eines Beispiels eines erfindungsgemäßen Fahrzeuges nach Art eines Elektrofahrrades, bei welchem eine erste Ausführungsform der Erfindung realisiert ist
- Figur 2: ist schematisches Blockdiagramm, einer bevorzugten Ausführungsform der erfindungsgemäßen Notabschaltanordnung.
- Figur 3: ist ein schematisches Blockdiagramm einer anderen Ausführungsform der erfindungsgemäßen Notabschaltanordnung in Verwendung mit einem Antrieb eines erfindungsgemäßen Fahrzeuges.

### Bevorzugte Ausführungsformen der Erfindung

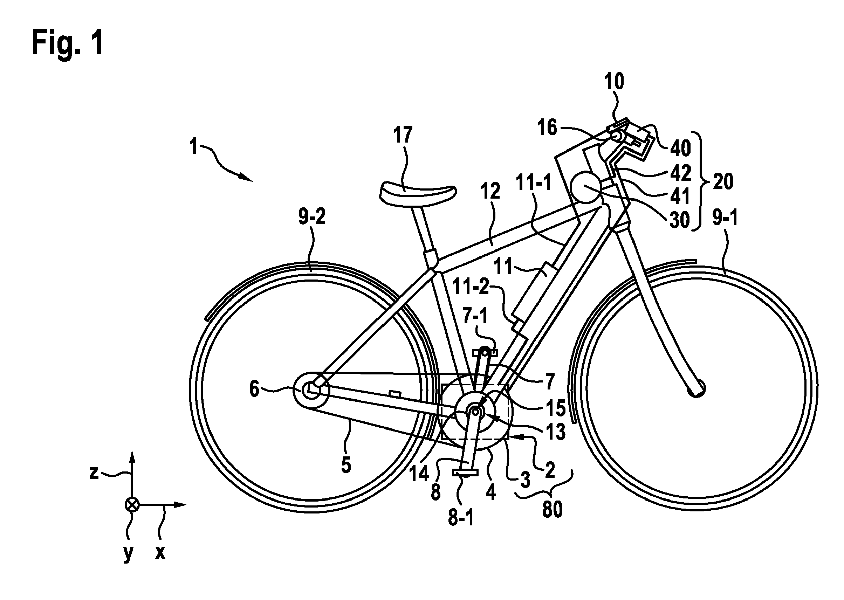

Nachfolgend werden unter Bezugnahme auf die Figuren 1 bis 3 Ausführungsbeispiele der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form von einander isoliert und beliebig miteinander kombiniert werden, ohne den Kern der Erfindung zu verlassen.

Zunächst wird unter Bezugnahme auf Figur 1 beispielhaft ein Elektrofahrrad als eine bevorzugte Ausführungsform des erfindungsgemäßen Fahrzeuges 1 im Detail beschrieben.

Das Fahrzeug 1 umfasst als Elektrofahrrad einen Rahmen 12, an dem ein Vorderrad 9-1, ein antreibbares Hinterrad 9-2 und ein Kurbeltrieb 2 mit zwei Kurbeln 7, 8 mit Pedalen 7-1 und 8-1 angeordnet sind. Ein elektrischer Antrieb 3 ist in den Kurbeltrieb 2 integriert. Am Hinterrad 9-2 ist ein Ritzel 6 angeordnet, dieses kann Teil einer Gangschaltung sein.

Bei alternativen Ausführungsformen kann der elektrische Antrieb 3 direkt auf das Vorderrad 9-1 oder auf das Hinterrad 9-2 wirken.

Ein Antriebsmoment, welches durch den Fahrer und/oder durch den elektrischen Antrieb 3 bereitgestellt wird, wird von einem Kettenblatt als Abtriebselement 4 am Kurbeltrieb 2 über eine Kette 5 auf das Ritzel 6 übertragen.

Am Lenker 16 des Fahrzeuges 1 ist ferner eine Steuereinheit 10 angeordnet, welche mit dem elektrischen Antrieb 3 verbunden ist. Im oder am Rahmen 12 ist ferner Batterie 11 ausgebildet, welche der Stromversorgung des elektrischen Antriebes 3 dient.

Im Rahmen 12 integriert ist ferner ein Kurbellager 13 oder Tretlager, welches ein Kurbelgehäuse 14 und eine Kurbelwelle 15 aufweist.

Beim erfindungsgemäßen Fahrzeug 1 gemäß Figur 1 wird der erfindungsgemäße Antrieb 80 gebildet von dem elektrischen Antrieb 3 und dem Kurbeltrieb 2, die als solche innerhalb des Kurbelgehäuses 14 zusammenwirken.

In Figur 1 ist das Fahrzeug 1 mit seiner Längserstreckungsrichtung in der x-Richtung ausgerichtet und vertikal und parallel zur xz-Richtung orientiert. Die Querrichtung des Fahrzeuges 1 erstreckt sich parallel zur y-Richtung.

Des Weiteren ist in Figur 1 der Antrieb 80 des erfindungsgemäßen Fahrzeuges 1 zu erkennen, dieser wird gebildet vom Kurbeltrieb 2, dem elektrischen Antrieb 3, z. B. in Form eines Elektromotors, dem Abtriebselement 4 in Form des Kettenblattes und der Batterie 11 zur Speisung des elektrischen Antriebes 3 über Versorgungs- und Steuerleitungen 11-1 und 11-2.

Bei der Ausführungsform der Figur 1 wird die erfindungsgemäße Notabschaltanordnung 20 von der Sensoreinheit 30, der Auswerteeinheit 40, der Steuer-/Messleitung 41 und der Steuer-/Kommunikationsleitung 42 gebildet.

In der Figur 1 sind die einzelnen Sensoren 31 bis 39 der Sensoreinheit 30 im Detail nicht dargestellt. Diese werden vielmehr schematisch allein durch die Sensoreinheit 30 insgesamt repräsentiert.

Bei der Ausführungsform der Figur 1 ist die Auswerteeinheit 40 als zur Steuereinheit 10 für den Antrieb 80 separate Einheit ausgebildet. Dies ist jedoch nicht zwingend. Vielmehr kann die Auswerteeinheit 40 der Notabschaltanordnung 20 in der Steuereinheit 10 integriert ausgebildet sein.

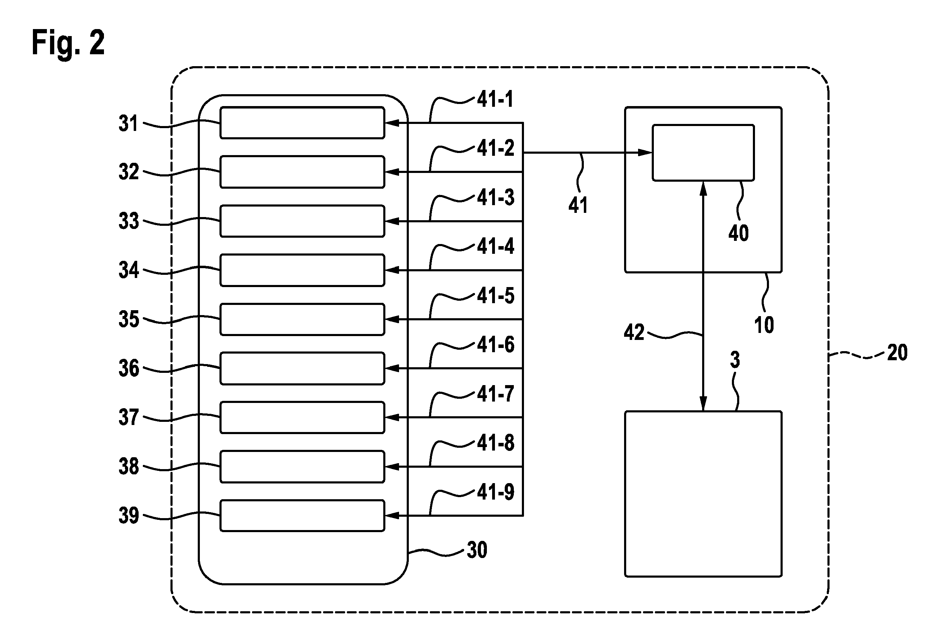

Eine derartige Situation ist im schematischen Blockdiagramm gemäß Figur 2 dargestellt.

Dort befindet sich die Auswerteeinheit 40 in der Steuereinheit 10 des Fahrzeuges 1 in integrierter Form. Über ein Steuer-/Messleitungsbündel 41 ist die Sensoreinheit 30 mit den Sensoren 31 bis 39 und einzelnen Steuer- und Messleitungen 41-1 bis 41-9 verbunden.

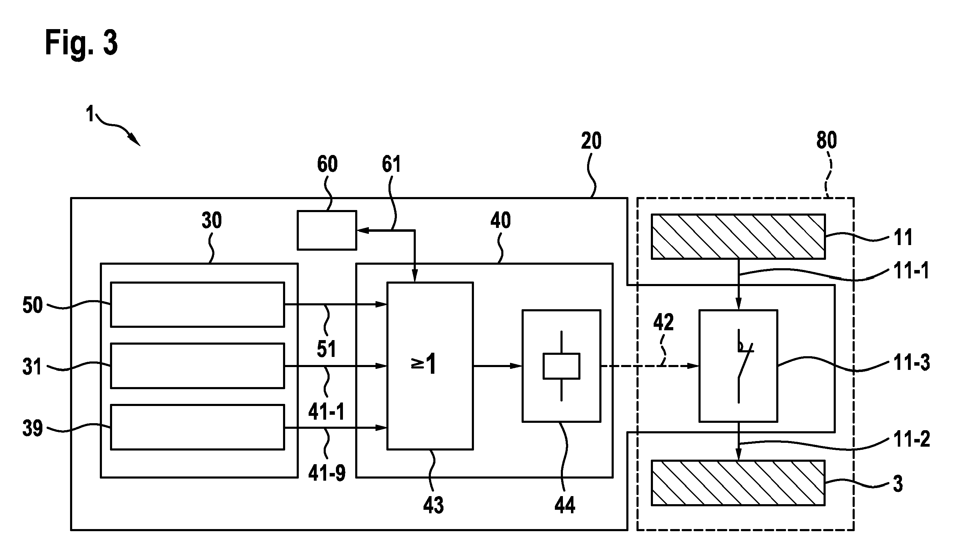

Über eine Steuer- und Kommunikationsleitung 42 ist die Auswerteeinheit 40 mit dem elektrischen Antrieb 3 verbunden. Auf diese Art und Weise ist ein Überführen des Zustandes des elektrischen Antriebes 3 von einem aktiven zu einem inaktiven Zustand möglich. Dies kann auf vielfältige Art und Weise geschehen, wie dies im Zusammenhang mit Figur 3 unten beschrieben wird.

Die einzelnen Sensoren 31 bis 39 der Sensoreinheit 30 können unter anderem in einer beliebigen Kombination umfassen einen Lage-, Orientierungs- und/oder Positionssensor 31, einen Geschwindigkeits- und/oder Beschleunigungssensor 32, einen Drehzahl- und/oder Drehmomentsensor 33, einen Pedalsensor 34, der auch als Pedalkontaktsensor bezeichnet werden kann, einen Sitzsensor 35, der auch als Sitzkontaktsensor bezeichnet werden kann, einen Griffsensor 36, der auch als Griffkontaktsensor bezeichnet werden kann, einen Lenksensor, der als Lenkrichtungssensor und/oder als Lenkereinschlagssensor aufgefasst werden kann, einen Raddrehzahlsensor 38 und einen Lichtsensor 39, der als ein Anwesenheitssensor des Fahrers am Fahrzeug fungieren kann.

Figur 3 zeigt in Form eines schematischen Blockdiagramms eine andere Ausführungsform des erfindungsgemäßen Fahrzeuges 1.

Dargestellt ist hier der Antrieb 80 mit dem elektrischen Antrieb 3 und der den Antrieb 3 versorgenden Batterie 11. Die Versorgung erfolgt über die Versorgungsleitungen 11-1 und 11-2, zwischen denen ein steuerbarer Unterbrecher 11-3 ausgebildet ist. Der Unterbrecher 11-3 ist im Normalbetrieb des Fahrzeuges 1 geschlossen und somit leitend. Nur in einem Abschaltzustand, welcher durch die Notabschaltanordnung 20 detektiert wird, wird der Unterbrecher 11-3 durch ein entsprechendes Steuersignal geöffnet und mithin der Energiefluss durch die Versorgungsleitungen 11-1, 11-2 unterbrochen, so dass der Betrieb des elektrischen Antriebes 3 ruht.

Um einen derartigen Steuermechanismus durch die Notabschaltanordnung 20 zu bewerkstelligen, wird zunächst über die Sensoreinheit 30 über eine Mehrzahl von Sensoren 31 und 39, hier nämlich über einen Lage-, Orientierungs- und/oder Positionssensor 31 und einen Lichtsensor 39 als Anwesenheitssensor im Bezug auf die Anwesenheit oder Abwesenheit des Fahrers des Fahrzeuges 1, eine Abfolge von Werten von Messgrößen bestimmt und in der Auswerteeinheit 40 bewertet. Dazu ist u. a. eine Logikeinheit 43 ausgebildet, über welche die einzelnen Messergebnisse oder daraus abgeleitete Größen miteinander logisch verknüpft werden. Im einfachsten Fall weist die Logikeinheit 43 einen mehrkanaligen Oderbaustein auf, so dass, sobald nur eine Messgröße eine Abschaltbedingung erfüllt, die Bewertungseinheit 44 zur Bewertung des Ausganges der Logikeinheit 43 ein Signal an den Unterbrecher 11-3 des Antriebes 80 aussendet, um die Stromzufuhr von der Batterie 11 zum elektrischen Antrieb 3 gemäß des detektierten Abschaltzustandes zu unterbrechen.

Die Ausführungsform gemäß Figur 3 zeigt neben den Sensoren 31 und 39 auch eine vom Fahrer betätigbare Not-Aus-Einheit 50, mittels der der Fahrer ad hoc aus eigenem Antrieb den Antrieb 80 in einen inaktiven Zustand überführen kann.

Als weiterer Bestandteil der Notabschaltanordnung 20 ist noch eine Reaktivierungseinheit 60 vorgesehen, über welche das Fahrzeug 1 und insbesondere der Antrieb 80 des Fahrzeuges 1 in einen normalen Zustand zurückversetzt werden kann. Eine derartige Reaktivierungseinheit 60 ist jedoch optional. Sie kann jedoch von Vorteil sein, da mit ihrer Hilfe verhindert werden kann, dass nach einem Abschaltzustand und dem Wegfall der Abschaltbedingung der Antrieb 80 aus sich heraus den Betrieb ohne Zutun des Fahrzeugführers unverhofft wieder aufnimmt. Erst durch und nach Betätigen der Reaktivierungseinheit 60 und durch Abgabe eines entsprechenden Signales über die Steuer-/Kommunikationsleitung 61 wird der Zustand des Fahrzeuges 1 und seines Antriebes 80 in den Normalbetrieb zurückgesetzt. Damit wird verhindert, dass nach dem Überstehen einer kritischen Situation mit Einnehmen eines Abschaltzustandes und Abschalten des Antriebes 80 das Fahrzeug 1 für den Fahrer unerwartet seinen Betrieb wieder aufnimmt und damit den Fahrer des Fahrzeuges 1 überrascht.

Diese und weitere Merkmale und Eigenschaften der vorliegenden Erfindung werden an Hand der folgenden Darlegungen weiter erläutert:
Fahrräder als Fahrzeuge 1 mit elektrischem Antrieb und insbesondere so genannte E-Bikes oder Pedelecs werden immer beliebter und finden eine zunehmende Verbreitung.

Ein drehmomentstarker elektrischer Antrieb 80, wie er bei Elektrofahrrädern und dergleichen vorgesehen ist, kann in bestimmten Fällen zu kritischen Situationen führen, z.B. wenn der Vortrieb vom Fahrer nicht mehr beherrscht wird oder wenn bei einem Unfall oder einer Fehlfunktion der Antrieb nicht abgeschaltet wird.

Mögliche kritische Situationen sind zum Beispiel
- ein plötzlicher unerwartet starker Vortrieb, der den ungeübten Fahrer überfordert (der Fahrer reagiert falsch und tritt z.B. in Pedale statt zu bremsen),
- ein "Hochsteigen" des Vorderrades bei plötzlichem unerwartet starkem Vortrieb des Hinterrades und ungünstiger Körperhaltung des Fahrers (Fahrer kippt nach hinten),
- ein Aufprall oder Sturz des Fahrers über den Lenker nach vorne (Hinterrad hebt ab und kommt hoch),
- ein starkes seitliches Kippen oder Umkippen des Rades bei gleichzeitig aktivem Antrieb,
- eine Fehlfunktion z.B. der Pedalsensorik oder der zugehörigen Steuerungselektronik (Antrieb bleibt aktiv, obwohl nicht mehr in Pedale getreten wird oder keine Schubunterstützung gewünscht ist).

Die Verhinderung eines unerwünschten Vortriebs in kritischen Situationen ist in derzeitigen E-Bike-Systemen nicht oder nur unzureichend realisiert.

Zwar ist den Erfindern intern ein mechanischer Not-Ausschaltknopf bekannt, der bei manueller Betätigung über ein Relais den E-Bike-Antrieb abschaltet, jedoch bietet dieses Vorgehen in Gefahrensituationen keinen automatischen Schutz an.

Um die oben genannten kritischen Situationen zu verhindern oder zumindest in ihren Auswirkungen abzuschwächen, wird vorgeschlagen, ggf. zusätzlich zum mechanischen Not-Ausschaltknopf, automatisch wirkende und eingreifende Sicherheitsvorrichtungen zur Abschaltung des elektrischen Antriebes bei E-Bikes, Pedelecs oder dergleichen einzeln oder in Kombination auszubilden.

Im Rahmen der Erfindung können einzeln oder miteinander kombiniert u.a. folgende Szenarien zur Auslösung einer Sicherheitsvorrichtung zum Abschalten des Antriebes 80 zum Tragen kommen:
(I) Lagesensor 31 und dergleichen zur Erkennung nicht plausibler und/oder kritischer räumlicher Lagen und/oder Orientierungen des Fahrzeuges 1, automatisch wirkend.
(II) Erkennung einer zeitweisen/andauernden und teilweisen/vollständigen Abwesenheit oder körperlichen Trennung eines Fahrers des Fahrzeuges 1 vom Fahrzeug 1, automatisch wirkend.

Auswirkung des Auslösens der Sicherheitsvorrichtung:
- Im Falle des automatischen Auslösens der Sicherheitsvorrichtung wird z.B. die Spannungsversorgung des Antriebes 80 des Fahrzeuges 1, z.B. eines E-Bikes vollständig unterbrochen. Die elektrische Verbindung vom Akku 11 zum Elektromotor 3 wird getrennt. Es wird kein Vortriebsmoment mehr durch den Antrieb 80 erzeugt.
- Alternativ kann die Unterbrechung der Drehmomentübertragung auch über die Auftrennung einer Momentenkupplung erfolgen.
- Es kann vorgesehen sein, dass nach einem Auslösen der Notabschaltanordnung 20 als Sicherheitsvorrichtung das System manuell neu aktiviert werden muss.

Erfindungsgemäß erfolgt also z.B. eine automatische Abschaltung eines Antriebes 80 eines E-Bikes oder Pedelecs in kritischen Situationen. Die im Rahmen dieser Erfindung vorgeschlagene Notabschaltanordnung 20 kann als Sicherheitsvorrichtung dabei eine Kombination von mehreren automatisch wirkenden Auslösemechanismen oder -vorrichtungen und eine Vorrichtung zur Trennung des elektrischen Antriebs 3 von der Spannungsversorgung 11 aufweisen.

Folgende Auslösevorrichtungen sind neben anderen einzeln oder in Kombination denkbar:
(1) Lagesensor 31 zur Erkennung nicht plausibler und/oder kritischer räumlicher Lagen oder Orientierungen des Fahrzeuges 1, z.B. eines E-Bikes.
   (1.1) Beim Überschreiten kritischer Grenzwerte für die räumliche Lage wird die Not-Aus-Sicherheitsvorrichtung aktiviert.
      (a) Bewegung um Längsachse (Achse in x-Richtung) ⇒ Kippen des Fahrzeuges 1 nach der Seite: ab einer bestimmten vorgegebenen Seitenneigung (Kippwinkel) wird die Not-Aus-Sicherheitsvorrichtung aktiviert.
      (b) Bewegung um Querachse (Achse in y-Richtung) ⇒ Kippen des Fahrzeuges 1 z.B. nach vorne (Überschlag) oder nach hinten ("Aufrichten"): ab einer bestimmten vorgegebenen Neigung nach vorne bzw. nach hinten wird die Not-Aus-Sicherheitsvorrichtung aktiviert.
   (1.2) Bei Überschreiten einer bestimmten vorgegebenen Drehrate und/oder Lageänderungsgeschwindigkeit (Winkelbeschleunigung) für die räumliche Lage um die Querachse (d.h. plötzliches Aufrichten/Überschlag) oder die Längsachse (Kippen) wird der Antrieb automatisch deaktiviert.
(2) Fahrerabwesenheit / Trennung des Fahrers vom Fahrzeug 1: Wenn erkannt wird, dass der Fahrer nicht mehr die Kontrolle über das Fahrzeug 1, z.B. das E-Bike oder Pedelec hat, wird der Antrieb 80 automatisch deaktiviert.

Allen Sicherheitsvorrichtungen gemeinsam ist, dass im Falle des Auslösens der oder durch die Notabschaltanordnung 20 als Not-Aus-Sicherheitsvorrichtung z.B. der Antrieb 80 von der Spannungsversorgung 11 getrennt wird.

Zur Reaktivierung oder Wiederinbetriebnahme des Antriebes 80 des Fahrzeuges 1 kann es notwendig sein, das System manuell zu aktivieren.

Auf Wunsch soll dem Fahrer die Möglichkeit zur Deaktivierung der Notabschaltanordnung 20 als Sicherheitsvorrichtung gegeben werden. Damit werden bei ausgeschaltetem Not-Aus auch extreme Fahrsituationen mit aktivem Antrieb 80 ermöglicht. Die Deaktivierung der Sicherheitsvorrichtung kann zum Beispiel durch Eingabe einer Tastenkombination über ein Bedien- und/oder Anzeigeinstrument erfolgen. Die Deaktivierung soll gegebenenfalls zeitlich begrenzt wirksam sein. Bei Neustart bzw. bei Inaktivität des E-Bikes für bestimmte Zeit muss die Notabschaltanordnung 20 als Not-Aus-Sicherheitsvorrichtung wieder aktiv werden.

Bei einem konkreten Beispiel erfolgt die Umsetzung über einen der Aktivierungspfade:
- Manueller Not-Aus,
- Lagesensor, oder
- Fahrerabwesenheit
und es kann die Anforderung einer Auftrennung erfolgen. Hierzu sind die Aktivierungspfade logisch miteinander ODER-verknüpft, d.h. eine Trennung erfolgt bereits, wenn mindestens einer der Pfade die Auftrennung anfordert. Das Logiksignal wird dann an einen Trennschütz als Unterbrecher 11-3 weitergegeben, der die letztendliche elektrische Trennung des Elektromotors 3 von der Spannungsversorgung 11 vornimmt.

## Patentansprüche

1. Notabschaltanordnung (20) für einen Antrieb (80) eines mit Motorkraft und insbesondere zusätzlich mit Muskelkraft antreibbaren Fahrzeuges (1), Elektrofahrrades, E-Bikes, Pedelecs oder dergleichen,
- welche eine Sensoreinheit (30) und eine Auswerteeinheit (40) aufweist,
- wobei die Sensoreinheit (30) ausgebildet ist,
(i) mindestens eine Größe zu überwachen, die für einen Zustand des Fahrzeuges (1) und/oder eines Fahrers des Fahrzeuges (1) charakteristisch ist, und
(ii) mindestens einen Wert der mindestens einen Größe bereitzustellen, und
- wobei die Auswerteeinheit (40) ausgebildet ist,
(iii) aus dem mindestens einen Wert der mindestens einen Größe zu bestimmen, ob ein Abschaltzustand vorliegt, und
(iv) beim Vorliegen eines Abschaltzustandes zu bewirken oder zu veranlassen, dass der Antrieb (80) des Fahrzeuges (1) einen inaktiven Zustand einnimmt oder beibehält.

2. Notabschaltanordnung (20) nach Anspruch 1,
bei welcher der inaktive Zustand des Antriebes (80) ein Zustand ist, bei welchem eine Kopplung des Antriebes (80) mit Drehmomentübertragung an ein Antriebsrad (9-2) des Fahrzeuges (1) unterbrochen, unterdrückt oder vermindert ist.

3. Notabschaltanordnung (20) nach einem der vorangehenden Ansprüche, bei welcher die Sensoreinheit (30) einen oder mehrere Sensoren (31-39) aufweist.

4. Notabschaltanordnung (20) nach Anspruch 3,
bei welcher der eine oder die mehreren Sensoren (31-39) ausgebildet sind, einen oder mehrere Werte einer oder mehrerer Größen, aus der Gruppe zu bestimmen, die aufweist:
- eine Position, Lage und/oder Orientierung des Fahrzeuges (1) und/oder deren zeitliche Änderung, insbesondere ein Gieren, Nicken und/oder Wanken,
- eine Fahrgeschwindigkeit des Fahrzeuges (1),
- eine Fahrbeschleunigung des Fahrzeuges (1), insbesondere einen Stoß und/oder Aufprall,
- ein Drehmoment des Antriebes (80),
- eine Drehzahl des Antriebes (80),
- eine Drehzahl eines oder mehrerer Räder (9-1, 9-2), insbesondere eine Drehzahldifferenz zwischen verschiedenen Räder (9-1, 9-2) und/oder einen Schlupf eines oder mehrerer Räder (9-1, 9-2),
- einen Lenkwinkel des Fahrzeuges (1),
- einen Einschlagwinkel eines Lenkers (16) des Fahrzeuges (1),
- einen Kontakt des Fahrers des Fahrzeuges (1) zu einem oder beiden von zwei Lenkergriffen des Fahrzeuges (1),
- einen Kontakt des Fahrers des Fahrzeuges (1) zu einer oder beiden von zwei Pedalen (7-1, 8.1) des Fahrzeuges (1),
- einen Kontakt des Fahrers des Fahrzeuges (1) zu einem Sitz (17) des Fahrzeuges (1),
- einen Abstand des Fahrers des Fahrzeuges (1) zu einer oder zu mehreren Komponenten und insbesondere zum Lenker (16) des Fahrzeuges (1) und
- eine zeitweise oder andauernde teilweise oder vollständige Abwesenheit oder Trennung des Fahrers vom Fahrzeug (1) und/oder
deren zeitliche Änderung.

5. Notabschaltanordnung (20) nach Anspruch 3 oder 4,
bei welcher ein jeweiliger Sensor (31-39) ausgewählt ist aus der Gruppe, die aufweist elektrische Sensoren, magnetische Sensoren, Drucksensoren, optische Sensoren, Infrarotsensoren, Funksensoren und dergleichen.

6. Notabschaltanordnung (20) nach einem der vorangehenden Ansprüche, bei welcher die Auswerteeinheit (40) ausgebildet ist, das Vorliegen eines Abschaltzustandes festzustellen, wenn ein Wert oder Werte einer oder mehrerer charakteristischer Größen in einem vorgegebenen Abschaltbereich liegen und insbesondere einen vorgegebenen Grenzwert über- oder unterschreiten.

7. Notabschaltanordnung (20) nach einem der vorangehenden Ansprüche, bei welcher die Auswerteeinheit (40) ausgebildet ist, das Vorliegen eines Abschaltzustandes erst dann festzustellen, wenn zu mehreren aufeinanderfolgenden Zeitpunkten ein Wert oder Werte einer oder mehrerer charakteristischer Größen in einem vorgegebenen Abschaltbereich liegen und insbesondere einen vorgegebenen Grenzwert über- oder unterschreiten.

8. Notabschaltanordnung (20) nach einem der vorangehenden Ansprüche, welche ausgebildet ist, bei aktivem Antrieb (80) und insbesondere aktivem Motor (3) des Antriebes (80) aktiv zu sein, vorzugsweise in Abhängigkeit von einer Drehzahl und/oder von einem Drehmoment des Antriebes (80).

9. Notabschaltanordnung (20) nach einem der vorangehenden Ansprüche, welche eine Umgehungseinheit (45) aufweist, durch deren Betätigung die Notabschaltanordnung (20) in einen inaktiven Zustand schaltbar ist, in welchem die Notabschaltanordnung (20) nicht bewirkt, dass der Antrieb (80) des Fahrzeuges (1) einen inaktiven Zustand einnimmt oder beibehält.

10. Notabschaltanordnung (20) nach einem der vorangehenden Ansprüche, mit einer Not-Aus-Einheit (50), die ausgebildet ist, bei-insbesondere manueller-Betätigung zu bewirken, dass der Antrieb (80) des Fahrzeuges (1) einen inaktiven Zustand einnimmt oder beibehält.

11. Notabschaltanordnung (20) nach einem der vorangehenden Ansprüche, mit einer Reaktivierungseinheit (60), die ausgebildet ist zu bewirken, dass in oder nach einem Abschaltzustand und/oder im inaktiven Zustand des Antriebes (80) der Antrieb (80) des Fahrzeuges (1) den inaktiven Zustand bis zur Betätigung der Reaktivierungseinheit (60) beibehält.

12. Fahrzeug (1), welches mit Motorkraft und insbesondere zusätzlich mit Muskelkraft antreibbar ist, insbesondere Elektrofahrrad, E-Bike, Pedelec oder dergleichen,
mit:
- einem Antrieb (80),
- mindestens einem Rad (9-1, 9-2), welches mit dem Antrieb (80) antreibbar ist, und
- einer Notabschaltanordnung (20) nach einem der Ansprüche 1 bis 11, durch welche der Antrieb (80) steuerbar ist.
